**Europäisches Patentamt**

**European Patent Office**

**Office européen des brevets**

(11) Veröffentlichungsnummer: **0 053 357**
**A1**

## (12) EUROPÄISCHE PATENTANMELDUNG

(21) Anmeldenummer: **81109905.0**

(22) Anmeldetag: **26.11.81**

(51) Int. Cl.³: **G 01 L 3/02**, G 01 L 3/04

(30) Priorität: **03.12.80 DE 3045579**

(43) Veröffentlichungstag der Anmeldung: **09.06.82**
**Patentblatt 82/23**

(84) Benannte Vertragsstaaten: **DE FR GB IT**

(71) Anmelder: **Gebr. Hasbach GmbH & Co. KG, Paffrather Strasse 132-134, D-5060 Bergisch-Gladbach 2 (DE)**

(72) Erfinder: **Miksch, Hans, Dipl.-Ing., Simrodstrasse 6, D-5107 Simmerath (DE)**

(74) Vertreter: **Nau, Walter, Dipl.-Ing., Johann-Pullem-Strasse 8, D-5000 Köln 50(Sürth) (DE)**

(54) **Drehmoment-Messgerät.**

(57) Das Drehmoment-Messgerät (2) ist z.B. zum Einbau in einen Wellenstrang von grosse Drehmomentbereiche aufweisenden Prüfständen vorgesehen und weist zwei Anschlussnaben oder Anschlussflansche (7, 8) auf, zwischen denen zumindest zwei Messelemente (9, 10) bzw. Gruppen von Messelementen vorgesehen sind, deren Biege- oder Drehverformung durch mechanische, hydraulische oder elektrische Geber ermittelt und angezeigt werden. Das zweite und folgende Messelement (10) bzw. Gruppe von Messelementen ist gegenüber dem ersten Messelement (9) bzw. Gruppe von Messelementen mit Spiel in Drehrichtung eingebaut.

Anmelderin:
Maschinenfabrik
Gebr. Hasbach GmbH & Co. KG
Paffrather Str. 132-134
5060 Bergisch Gladbach 2

0053357

24.11.1981

7003/80 G EP

## Drehmoment-Meßgerät

Die Erfindung bezieht sich auf ein Drehmoment-Meßgerät, insbesondere zum Einbau in den Wellenstrang von große Drehmomentbereiche aufweisenden Prüfständen mit zwei Anschlußnaben oder Anschlußflanschen, zwischen denen zumindest ein Meßelement angeordnet ist, dessen bzw. deren Biege- oder Drehverformung durch mechanische, hydraulische oder elektrische Geber ermittelt und angezeigt oder registriert wird und als Maß für die Drehmomentbelastung dient.

Solche Drehmoment-Meßgeräte sind allgemein bekannt (Drehmomentmeßwellen Tl und T2 der Firma Hottinger Baldwin Meßtechnik GmbH). Solche Drehmoment-Meßgeräte, die auch zur Bestimmung von Drehmomenten an Leistungsprüfständen benutzt werden, werden durch den im Prüfstands-Lastenheft angegebenen Maximalwert für das Wellenmoment ausgelegt. Solche maximalen Drehmomentwerte treten auf, wenn die maximale Bremskraft vom Reifen oder das maximale Antriebsmoment ermittelt werden sollen. Sollen geringere Drehmomentwerte exakt bestimmt werden, so resultiert daraus der Betrieb des Drehmoment-Meßgerätes im geringen Teillastbereich mit der Tendenz größerer Ungenauigkeit mit abnehmendem Drehmoment. Geringere Drehmomentwerte müssen aber auch exakt ermittelt werden, beispielsweise, wenn die Rollreibung von Reifen ermittelt werden soll. Zu diesem Zweck ist es bekannt, in den Wellenstrang des
Leistungsprüfstandes ein anderes Drehmoment-Meßgerät
einzubauen, das einen geringeren Meßbereich aufweist. Diese
Änderungsarbeiten an der Prüfanlage sind jedoch personal-,
zeit und kostenintensiv.

Die heute weiterhin noch verwendete Methode, das Messen
geringerer Werte mit einem Meßelement großen Meßbereichs
durch Steigerung der elektrischen Verstärkung zu
erleichtern, bringt den Nachteil, daß auch die
Fehlersignale, zum Beispiel der Temperaturdrift und das
elektrische Übersprechen auf einen benachbarten Meßkreis
verstärkt werden.

Aufgabe der vorliegenden Erfindung ist es daher, diese
Fehler zu vermeiden und ein Drehmoment-Meßgerät zur
Verfügung zu stellen, das große Drehmomentbereiche abdeckt,
ohne dabei in den Bereichen geringerer Drehmomente
Fehlmessungen oder sonstige Fehlersignale zu verursachen.
Gelöst wird die Aufgabe der Erfindung durch die im
Kennzeichen von Anspruch 1 genannten Merkmale. Dadurch wird
erreicht, daß je nach gewünschtem Drehmomentbereich mehrere
Meßelemente selbsttätig stufenweise hintereinander
zugeschaltet werden, so daß der gesamte
Drehmoment-Meßbereich aufgeteilt wird und dadurch in allen
Bereichen genaue Meßwerte ermittelt werden können. Bei
geringeren Drehmomenten wird nur ein Meßelement oder eine
Gruppe von Meßelementen und deren Torsion oder Biegung als
Maß für die Drehmomentbelastung benutzt. Kommen diese
Elemente oder Gruppe von Elementen

7003/80 G EP
0053357

in den Bereich ihrer Nenndrehbelastung, so ist das weitere Meßelement bzw. die weitere Gruppe von Meßelementen soweit zwischen den Anschlußnaben oder Anschlußflanschen verdreht oder verschoben, nicht jedoch tordiert oder gebogen, daß das Spiel ausgeglichen ist und diese Meßelemente bzw. Gruppe von Meßelementen zur Anlage kommen und dadurch selbst eine Verdrehung oder Biegung erfahren und zusätzlich oder auch getrennt die entsprechenden Drehmomentwerte ermitteln. Nach Nenndrehbelastung auch des zweiten Meßelements bzw. der zweiten Gruppe von Meßelementen hat ein weiteres Meßelement das Spiel überwunden und kommt zum Anschlag, so daß dieses hinzutritt. Je nach baulichem Aufwand können eine große Zahl von Meßelementen bzw. Gruppen von Meßelementen in entsprechender Weise benutzt werden.

Eine vorteilhafte Ausgestaltung eines Drhmoment-Meßgerätes ist den Merkmalen von Anspruch 2 zu entnehmen, wobei die Meßelemente als Drehstab und um den Drehstab herum angeordnete Drehhülsen ausgeführt sind. Dadurch wird eine geschlossene, auch gegen äußere Einflüsse unempfindliche Bauart zur Verfügung gestellt, die auch nicht zu Verschmutzung neigt. Dabei können im Bereich eines Anschlußflansches oder um die äußere Drehhülse herum Schleifringeinheiten angeordnet sein, die die Meßwerte der Torsionsgeber an dem Drehstab und den Drehhülsen weiterleiten. In vorteilhafter Weise sind die Geber als Dehnmeßstreifen in üblicher Weise ausgestaltet.

Gemäß dem Merkmal von Anspruch 3 kann der Drehstab auch die axiale Fixierung zwischen den beiden Anschlußflanschen übernehmen. Eine gute Führung von Drehstab und Drehhülsen untereinander wird durch Lager zwischen diesen Teilen oder dem betreffenden Anschlußflansch erzielt, die anstelle des Drehstabes auf die axiale Fixierung der Anschlußflansche zueinander übernehmen können.

Ein anderes Ausführungsbeispiel gemäß den Merkmalen der Ansprüche 5 bis 8 ist durch axiale oder radiale Biegestäbe gekennzeichnet, die zwischen Anschlußnaben oder Anschlußflanschen angeordnet sind. Dabei ist in vorteilhafter Weise eine erste Gruppe von Biegestäbe in beiden Anschlußnaben oder Anschlußflanschen eingespannt und die nächste oder die darauffolgende Gruppe mit entsprechenden Spielen in der Anschlußnabe oder dem Anschlußflansch versehen, so daß nach Durchbiegung der ersten Gruppe die zweite und anschließend die dritte Gruppe von Biegestäben zur Anlage kommt. Gegenüber dem Drehmoment-Meßgerät mit Drehstab und Drehhülsen kann dieses Meßgerät kürzer ausgeführt werden, dafür jedoch eine größere radiale Erstreckung haben.

Um Störkräfte auf die Drehmoment-Meßgeräte auszuschalten, werden diese in vorteilhafter Weise mittels elastischer Kupplungen an die Wellenstränge oder dergleichen angeschlossen. Die Kupplungen sind drehsteif aber nachgiebig in axialer Richtung. Sie können auch Fluchtfehler ausgleichen.

Gemäß dem Merkmal von Anspruch 10, daß Dämpfer zwischen den Anschlägen der zweiten und weiteren Meßelementen bzw. Gruppen von Meßelementen und den Anschlußnaben oder Anschlußflanschen vorsieht, können bei Drehmomentbelastungen im Übergangsbereich von zwei Elementen auftretende Schwingungen ausgeglichen werden. Diese können in einfacher Weise mechanisch, durch elastische Widerlager oder hydraulisch ausgeführt sein.

Zur weiteren Erläuterung der Erfindung wird auf die Zeichnung verwiesen, in der mehrere Ausführungsbeispiele dargestellt sind. Es zeigen:

Fig. 1 einen skizzierten Gesamtaufbau eines Leistungsrollenprüfstandes mit eingebauten, erfindungsgemäßen Drehmoment-Meßgeräten,

Fig. 2 einen Längsschnitt durch ein Drehmoment-Meßgerät mit einem Drehstab und zwei Drehhülsen,

Fig. 2a einen Querschnitt durch das Drehmoment-Meßgerät gemäß der Linie A-B in Figur 2,

Fig. 3 einen Längsschnitt durch ein Drehmoment-Meßgerät mit zwei Gruppen von Biegestäben und

Fig. 3a einen Querschnitt durch das Drehmoment-Meßgerät gemäß der Linie A-B in Figur 3.

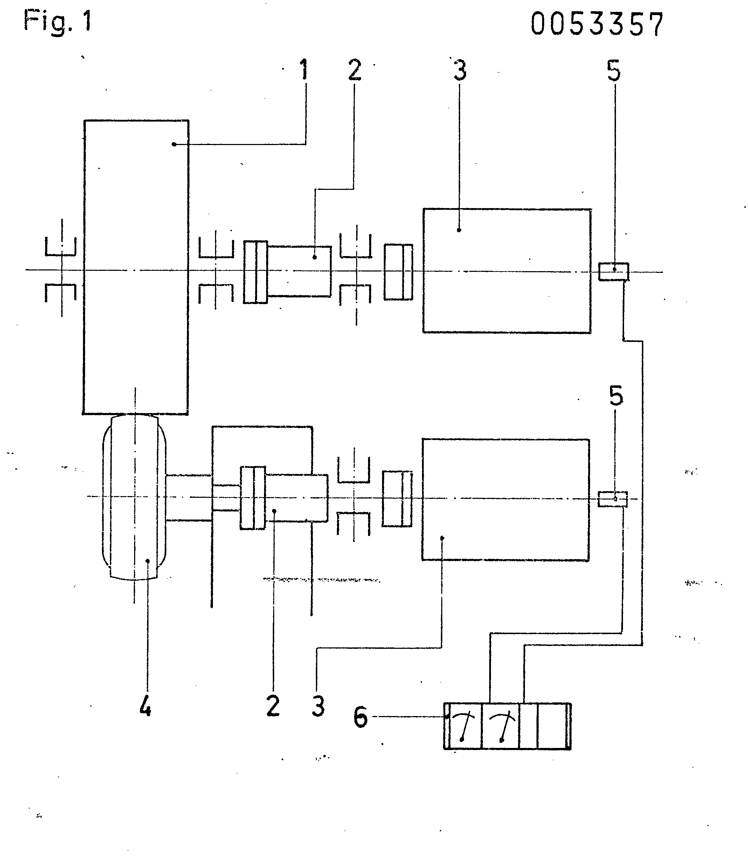

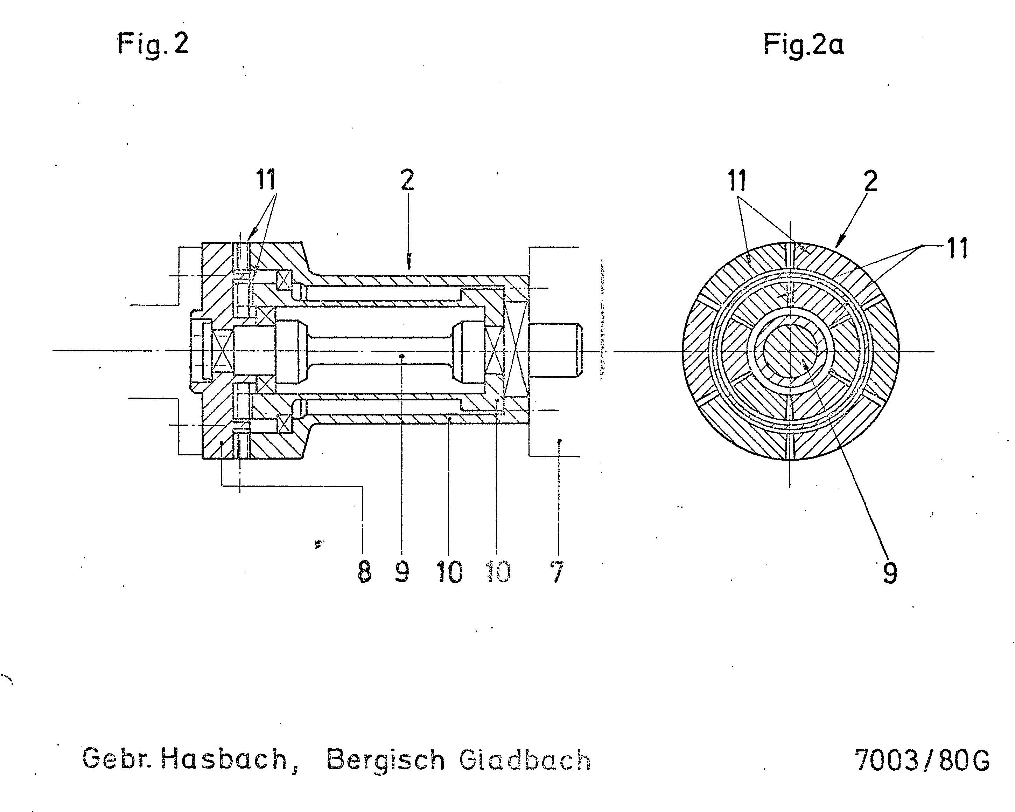

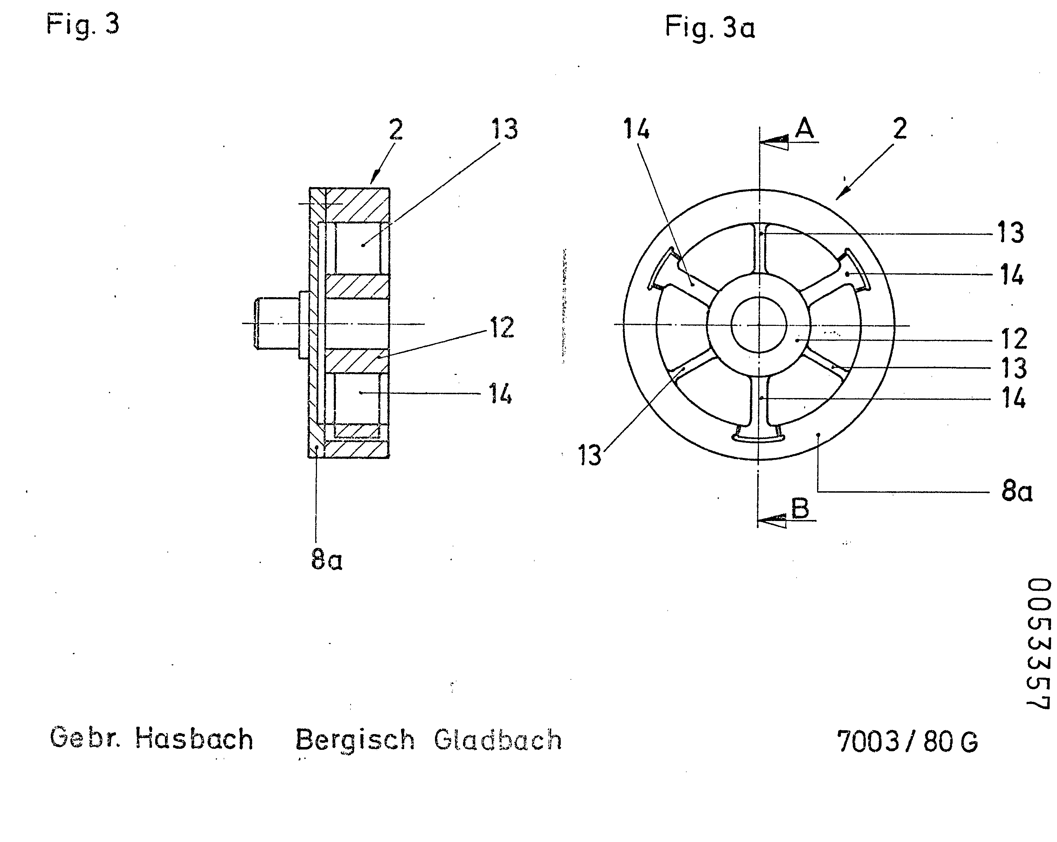

In Fig. 1 ist mit 1 eine Rolle des Leistungsprüfstands bezeichnet, die beidseitig gelagert ist, wobei an deren Welle ein in den Fig. 2, 2a sowie 3 und 3a näher beschriebenes Drehmoment-Meßgerät 2 angeschraubt ist. Das Drehmoment-Meßgerät 2 steht über eine elastische Kupplung mit einem Antriebs- und/oder Bremsmotor 3 in Verbindung. Parallel zu dem ersten Wellenstrang ist ein zweiter vorgesehen, der ein zu prüfendes Rad 4 eines Kraftfahrzeuges aufweist, an dessen Welle ein weiteres Drehmoment-Meßgerät 2 angeflanscht ist, das wieder über eine elastische Kupplung mit einem weiteren Antriebs- und/oder Bremsmotor 3 in Verbindung steht. Mit 5 sind Schleifringeinheiten bezeichnet, die, nicht näher dargestellt, mit als Dehnmeßstreifen ausgebildeten Gebern der Meßelemente des Drehmoment-Meßgerätes 2 in Verbindung stehen und die Signale an ein Anzeigegerät 6 weitergeben, an dem u.a. die Drehmomente in den Wellensträngen abgelesen werden können.

Das in den Fig. 2 und 2a näher dargestellte Drehmoment-Meßgerät 2 weist einen ersten Anschlußflansch 7 und einen zweiten Anschlußflansch 8 auf. Zwischen den Anschlußflanschen ist ein Drehstab 9 drehfest angeordnet und axial festgelegt. Um den Drehstab 9 herum sind 2 Drehhülsen 10 gelagert, die drehfest mit dem Anschlußflansch 7 verbunden und über Klauen 11 mit dem zweiten Anschlußflansch 8 in Verbindung treten können. Zwischen den Klauen ist Spiel in Drehrichtung vorgesehen, so daß bei Drehmoment-Belastung des Drehmomentmeßgerätes 2 zuerst der Drehstab 9 tordiert wird und zwar bis kurz vor die Nenndrehbelastung. Bei dann weiter ansteigender Drehmomentbelastung kommen die Klauen zwischen dem zweiten Anschlußflansch und der ersten Drehhülse 10 zum Anschlag, so daß auch die Drehhülse 10 tordiert wird. Bei weiter ansteigender Drehmomentbelastung kommt dann die zweite Drehhülse zum Anschlag, so daß ein noch höheres Drehmoment aufgenommen und gemessen werden kann. Dabei dürfen der Drehstab und die erste Drehhülse nicht überdreht werden. Die Verdrehung des Drehstabes und der Drehhülsen wird in üblicher Weise über Dehnmeßstreifen ermittelt. Die Anschlußleitungen der Dehnmeßstreifen sind in vorteilhafter Weise durch einen Flansch hindurchgeführt, um nach außen zu der Schleifringeinheit zu gelangen. Zwischen dem Drehstab und den Drehhülsen ist in der Nähe des zweiten Anschlußflansches je ein Wälzlager vorgesehen.

In den Fig. 3 und 3a ist ein ebenfalls allgemein mit 2 bezeichnetes Drehmoment-Meßgerät dargestellt, welches eine Anschlußnabe 12 und einen modifizierten Anschlußflansch 8a aufweist. Zwischen der Anschlußnabe 12 und dem Anschlußflansch 8a sind radial ausgerichtet zwei Gruppen von Biegestäben 13 und 14 angeordnet. Alle Biegestäbe 13 und 14 sind in der Anschlußnabe 12 eingespannt. Die erste Gruppe von Biegestäben 13 ist ebenfalls in dem Anschlußflansch 8a eingespannt, während die zweite Gruppe von Biegestäben 14 mit Spiel in Drehrichtung in den Anschlußflansch 8a eingesetzt ist. Die Funktion dieses Drehmoment-Maßgerätes entspricht im wesentlichen der der Figuren 2 und 2a, wobei die Dehnmeßstreifen an den Biegstäben 13 und 14 befestigt sind.

0053357

Anmelderin:
Maschinenfabrik
Gebr. Hasbach GmbH & Co. KG
Paffrather Str. 132-134
5060 Bergisch Gladbach 2

24.11.1981
7003/80 G EP

P a t e n t a n s p r ü c h e

1.      Drehmoment-Meßgerät, insbesondere zum Einbau in den Wellenstrang von große Drehmomentbereiche aufweisenden Prüfständen mit zwei Anschlußnaben oder Anschlußflanschen, zwischen denen zumindest ein Meßelement angeordnet ist, dessen bzw. deren Biege- oder Drehverformung durch mechanische, hydraulische oder elektrische Geber ermittelt und angezeigt oder registriert wird und als Maß für die Drehmomentbelastung dient, dadurch gekennzeichnet, daß zumindest zwei Meßelemente (9 und 10) oder Gruppen von Meßelementen (13 und 14) vorgesehen sind, daß das zweite und folgende Meßelement (10) oder Gruppe von Meßelementen (14) gegenüber dem vorhergehenden Meßelement (9) oder Gruppe von Meßelementen (13) mit Spiel in Drehrichtung eingebaut ist und daß das Maß des Spiels die Nenndrehbelastung der vorhergehenden Meßelemente (9) oder Gruppe von Meßelementen (13) nicht übersteigt.

2.      Drehmoment-Meßgerät nach Anspruch 1, dadurch gekennzeichnet, daß das erste Meßelement ein Drehstab (9) ist, der drehfest, vorzugsweise mittels Keilwellen- oder Zahnnabenprofil, mit den Anschlußflanschen (7 und 9) verbunden ist und daß die weiteren Meßelemente Drehhülsen (10) sind, die koaxial um den Drehstab (9) angeordnet, drehfest mit einem Anschlußflansch (7) verbunden sind und über formschlüssige Übertragungselemente (11) mit dem zweiten Anschlußflansch (8) nach Überschreitung der Spiele drehfest kuppelbar sind.

3.      Drehmoment-Meßgerät nach einem der Ansprüche 1 oder 2, dadurch gekennzeichnet, daß der Drehstab (9) an beiden Anschlußflanschen (7 und 8) axial festgelegt ist.

4.      Drehmoment-Meßgerät nach einem der Ansprüche 1 bis 3, dadurch gekennzeichnet, daß die Drehhülsen (10) und der Drehstab (9) in der Nähe der formschlüssigen Übertragungselementen (11) mittels Lager aneinander und/oder an dem betreffenden Anschlußflansch (8) abgestützt sind.

5.      Drehmoment-Meßgerät nach einem der Ansprüche 1 bis 4, dadurch gekennzeichnet, daß die erste Gruppe von Meßelementen Biegestäbe (13) sind, die in der Anschlußnabe (12) und dem Anschlußflansch (8a) starr eingespannt sind und daß die weiteren Meßelemente Gruppen von Biegestäben (14) sind, die in der Anschlußnabe (12) oder dem Anschlußflansch (8a) starr eingespannt sind und nach Überschreitung der Spiele gruppenweise mit dem Anschlußflansch (8a) oder der Anschlußnabe (12) kuppelbar sind.

6.      Drehmoment-Meßgerät nach Anspruch 5, dadurch gekennzeichnet, daß alle Biegestäbe (13 und 14) radial ausgerichtet sind.

7.      Drehmoment-Meßgerät nach Anspruch 5, dadurch gekennzeichnet, daß alle Biegestäbe (13 und 14) axial ausgerichtet sind.

8. Drehmoment-Meßgerät nach einem der Ansprüche 5 bis 7, dadurch gekennzeichnet, daß zwischen der Anschlußnabe (12) und dem Anschlußflansch (8a) ein Lager angeordnet ist.

9. Drehmoment-Meßgerät nach einem der Ansprüche 1 bis 8, dadurch gekennzeichnet, daß die Anschlußnabe (12) und die Anschlußflansche (7, 8 und 8a) mittels drehsteifer, axial- und winkelnachgiebiger Kupplungen an die Wellenstränge oder dergleichen angeschlossen sind.

10. Drehmoment-Meßgerät nach einem der Ansprüche 1 bis 9, dadurch gekennzeichnet, daß zwischen den weiteren Meßelementen (Drehhülsen 10 oder Gruppen von Biegestäben 14) und den weiteren Anschlußflanschen (8 und 8a) Dämpfer tangential eingesetzt sind.

11. Drehmoment-Meßgerät nach einem der Ansprüche 1 bis 10, dadurch gekennzeichnet, daß die Geber als Dehmeßstreifen ausgebildet sind und, zum Beispiel bei zwei Meßelementen, in Brückenschaltung ausgeführt sind und daß bei Drehmomentbelastung beider Meßelemente (9 und 10) bzw. Gruppe von Meßelementen (13 und 14) der Meßwert aus einer elektrischen Addition der Signale beider Meßelemente bzw. Gruppe von Meßelementen besteht.

Fig. 1

0053357

Fig. 2                                    Fig. 2a

8  9  10  10  7                                    9

Gebr. Hasbach,  Bergisch Gladbach          7003/80G

2/3

0053357

Fig. 3                                    Fig. 3a

Gebr. Hasbach    Bergisch Gladbach                7003 / 80 G

Europäisches
Patentamt

**EUROPÄISCHER RECHERCHENBERICHT**

0053357

Nummer der Anmeldung

EP 81 10 9905.0

| | **EINSCHLÄGIGE DOKUMENTE** | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | DE - B1 - 2 654 863 (MOTOREN- UND TUR- BINEN-UNION) <br><br> * Anspruch 1 * <br><br> -- | 1,2 | G 01 L 3/02 <br> G 01 L 3/04 |
| A | DE - B2 - 2 817 307 (ZAHNRADFABRIK FRIEDRICHSHAFEN AG) <br><br> * Anspruch * <br><br> -- | 1 | |
| A | US - A - 3 049 003 (H.B. FELDER) <br><br> * Anspruch 1; Fig. 1 * <br><br> ---- | 1 | RECHERCHIERTE SACHGEBIETE (Int. Cl.³) <br><br> G 01 L 3/00 |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde lie- gende Theorien oder Grund- sätze
E: älteres Patentdokument, das jedoch erst am oder nach dem Anmeldedatum veröffentlicht worden ist
D: in der Anmeldung angeführtes Dokument
L: aus andern Gründen ange- führtes Dokument

&: Mitglied der gleichen Patent- familie, übereinstimmendes Dokument

X  Der vorliegende Recherchenbericht wurde für alle Patentansprüche erstellt.

| Recherchenort <br> Berlin | Abschlußdatum der Recherche <br> 26-02-1982 | Prüfer <br> KÖHN |
|---|---|---|

EPA form 1503.1   06.78